# EUROPEAN PATENT SPECIFICATION

(11) **EP 1 079 690 B1**
(45) Date of publication and mention of the grant of the patent: **28.01.2004**
(21) Application number: 99922392.8
(22) Date of filing: 21.05.1999
(51) Int. Cl.: A01M 1/00, A01M 1/10, A01M 1/02

(54) **PEST CONTROL**
SCHÄDLINGSBEKÄMPFUNG
LUTTE CONTRE LES INSECTES NUISIBLES

(30) Priority: 23.05.1998 GB 9811246
(43) Date of publication of application: 07.03.2001
(73) Proprietor: UNIVERSITY OF SOUTHAMPTON, Southampton, Hampshire SO17 1BJ (GB)
(72) Inventor: HOWSE, Philip Edwin, Gosport, Hampshire PO16 2NG (GB)
(74) Representative: Britter, Keith Palmer
(86) International application number: PCT/GB1999/001631
(87) International publication number: WO 1999/060848

(56) References cited:
- EP-A- 0 392 935
- EP-A- 0 599 755
- WO-A-94/00980
- WO-A-97/18704

## Description

This invention relates to the control of pests, such as, insect pests, and is especially, but not exclusively, related to the control of flying or crawling insect pests.

The constant pressure of pesticide use in agriculture can lead to the development of pesticide-resistance amongst insect pest species, resulting in the killing of non-target animals including beneficial predators and parasites which tend to maintain a natural balance of the pest species. Also, it leads to the contamination of the environment with consequential harmful effects on human and animal health, resulting from exposure to pesticide residues in water and comestible products. Therefore, it is desirable to target pest species accurately and to minimise the amount of pesticide which finds its way into the environment and/or on to non-target animals and organisms.

In International Patent Application No. PCT/GB93/01442 (Publication No. WO94/00980), there is disclosed means for targeting accurately pest species, such disclosure including a method of luring one sex of an inspect pest species to a bait using that insect pests' sexual pheromone, usually in the form of a volatile attractant, contaminating that insect pest with electrostatically-charged powder or other particulate material formulated with a suitable slow-acting killing agent or behaviour-modifying chemical and allowing the so-contaminated insect pest to contaminate other insect pests of the opposite sex during mating attempts. For this method to operate, it is desirable that as much as possible of the powder or other particulate material is picked up by the target insect pest and not lost into the environment by the action of wind and weather, where it can affect non-target animals or organisms.

Accordingly, it is an object of the present invention to provide various methods of and means for controlling pests, such as flying or crawling insect pests, which overcome, or at least substantially reduce, the disadvantages associated with the known pest control methods discussed above.

One aspect of the invention provides a method of controlling a pest by at least partially coating the pest with a particulate material incorporating a killing or behaviour-modifying agent, which method comprises directing, attracting or otherwise luring the pest on to, above, or otherwise adjacent a surface bearing such a particulate material and is characterised by rendering the material airborne by the movement of the pest on, above, or in the region of the particulate material-bearing surface.

The particulate material is preferably a powder which is sufficiently fine for it to be rendered airborne by a pest moving across, flying above or adjacent, or taking-off from the particulate material-bearing surface, so that the pest becomes at least partially coated with the powder.

The powder may comprise or be combined with at least one biological, synthetic or natural pesticide as a killing agent and, generally, the particulate material may be charged electrostatically, preferably by friction, as it is rendered airborne from the particulate material-bearing surface.

The surface is preferably associated with a trap having an electrically insulating material which may comprise a plastics material.

The inventive method may include providing a pheromone or parapheromone attractant for luring pests to be controlled and the surface may be coated with a fine powder which is charged electrostatically, preferably retaining its electrostatic charge for long periods on the surface.

Any undesired removal or loss of the particulate material from the surface may be eliminated or at least substantially reduced, for example, by means of raised edges, preferably rounded, at the periphery of the surface.

Alternatively or additionally, the particulate material can be accommodated in at least one recess or trough associated with the particulate material-bearing surface, preferably in at least one recess provided in the surface. Also, the upper periphery of the or each recess may be provided with raised edges.

Further, the particulate material-bearing surface may be provided on a plate which is preformed and stands alone, that is, free-standing, preferably upon feet.

Alternatively, the particulate material-bearing surface can comprise at least one trough in which the particulate material is accommodated.

In any event, the dimensions of the or each recess or the or each trough in which the particulate material is accommodated, are preferably generally smaller than those of the pests to be controlled.

In a preferred embodiment, the surface comprises part of a tubular trap, preferably of triangular cross-section and open-ended, in which case,. the surface may be an interior surface of the trap of which at least part, and preferably a major proportion, may be coated with the particulate material, such as a fine powder, which, as indicated above, may be charged electrostatically, preferably by friction.

A second aspect of the invention resides in pest control apparatus comprising a surface on to, above or in the region of which a pest is capable of being directed, attracted or otherwise lured and which bears a particulate material incorporating a killing or behaviour-modifying agent, and is characterised in that the particulate material is capable of being rendered airborne by movement of the pest on, above, or in the region of the particulate material-bearing surface.

The particulate material is preferably a powder which is sufficiently fine for it to be rendered airborne by a pest moving across, flying above or in the region of, or taking-off from the particulate material-bearing surface, so that the pest becomes at least partially coated with the powder which may comprise or be combined with at least one biological, synthetic or natural pesticide as a killing agent.

The particulate material may have properties which enable it to become charged electrostatically as it is rendered airborne from the particulate material-bearing surface, preferably its being chargeable by friction.

The surface can be is associated with a trap comprising an electrically insulating material, preferably a plastics material.

The inventive apparatus may also comprise a pheromone or parapheromone attractant

Further, the surface may be coated with a fine powder which is charged electrostatically, preferably being capable of retaining its electrostatic charge for long periods on the trap surface.

Any undesired removal or loss of the particulate material from the surface may be eliminated or at least substantially reduced, preferably by raised edges, such as raised and rounded edges, at the periphery of the surface.

In an embodiment of inventive apparatus, the particulate material is accommodated in at least one recess or trough associated with the particulate material-bearing surface. At least one recess may be provided in the particulate material-bearing surface, in which case, the upper periphery of the or each recess may have raised edges.

Thus, the pest-contaminating particulate material is protected from wind action and ensures that it can be attached to a pest, such as a flying insect pest, as it flies above or takes-off from the surface. By using the downthrust of air generated by such a pest's wing beats to render the particulate material, such as a fine powder, airborne, it also ensures at the same time that the powder can become charged electrostatically, so that it will adhere to the pest.

The particulate material-bearing surface may comprise at least one trough in which the particulate material is accommodated, with the dimensions of the or each recess or the or each trough in which the particulate material is accommodated, preferably being generally smaller than those of the pests to be controlled.

The surface may comprise part of a tubular trap, preferably of triangular cross-section and being open-ended optionally, in which case, the surface may be an interior surface of the trap of which at least part, and preferably a major proportion, may be coated with the particulate material which, if a fine powder or otherwise, may be charged electrostatically, preferably by friction.

In one embodiment of the invention, there is provided a plate, which is preferably preformed and made of a plastics material and can stand alone, preferably on feet, and whose surface has an array of recesses associated therewith, preferably in the form of holes, apertures, cavities or other indentations of smaller diameter than the body length of the target pest. This plate may be placed in the bottom of a pest monitoring trap, normally, but not necessarily, in a generally horizontal plane in use. The particulate material, preferably in the form of a fine powder and whether it be charged or uncharged, is accommodated in the recess(es) and, in this manner, is protected from the undesirable effects of wind action or other air currents. Also, the trap need contain no sticky materials or other pest-retaining devices, so that pests can enter and leave the inventive trap readily. In one embodiment, the plate may also constitute the base of the trap.

It is well known that when a flying pest, such as a flying insect pest, is airborne, it gains lift by providing downward momentum to the air around it. It can be calculated that a flying insect pest, such as a mosquito weighing about 1 milligram, can generate a downward air velocity of 0.5 ms⁻¹, whilst a larger flying inspect pest, such as a large moth weighing about 1 gram, can generate a downward air velocity of 1 ms⁻¹. Additionally, it is known that during take-off, flying insect pests can generate extra lift by generating vortices on the downward strokes of their wings, which vortices are then directed downwardly (Kingsolver, Scientific American 1985).

A flying insect pest which lands on, say, the plate of the embodiment of inventive trap discussed above, and then takes-off or hovers above it, will displace air downwardly at comparatively high velocity. This is sufficient to render the particulate material, such as a fine powder, on the plate, airborne and as the powder becomes detached from the surface of the plate, it can, under certain circumstances, acquire an electrostatic charge. The polarity of any such charge will depend upon the nature of the particulate material and of the surface which is bears it and, thus, can be adjusted so that it is of opposite polarity to that of the surface of the body of the insect pest. In this way, the movement of a flying insect pest can be used to produce an appropriate electrostatic charge on the particles of particulate material, as well as rendering them airborne. The electrostatically-charged particles of particulate material, such as a fine powder, will tend to settle on the insect pest, its being attracted towards it from very short distances.

Thus, it can be seen that the various aspects of the invention provide means for:
1. coating pests, such as insect pests, with a powder whose particles are capable of being rendered airborne by the pests' own movements;
2. reducing loss of powder from a pest control trap or "bait" station by wind or other air currents;
3. controlling powder loss by accommodating the powder or other particulate material in recesses associated with a surface of a pest control trap, such recess(es) being smaller in dimension than the pests;
4. controlling, in particular, flying insect pests by coating them with powder or other fine particulate material which can be charged electrostatically, for example by friction, as it is rendered airborne by the pests' movements;
5. controlling insect pests, in particular, by using powders of other particulate material incorporating biological, synthetic and/or natural pesticides; and
6. controlling crawling pests, for example, insect pests, by using a particulate material which can be rendered airborne by the pests running across a surface bearing the particulate material.

In order that the various aspects of the invention may be more fully understood, preferred embodiments in accordance with at least some of them will now be described by way of example and with reference to the accompanying drawings in which:
Figure 1 is a sectional perspective view of one embodiment of pest control trap;
Figures 2 and 3 are respective plan and sectional views of a base plate of the trap shown in Figure 1; and
Figures 4 and 5 are respective perspective and side elevational views of another embodiment of pest control trap.

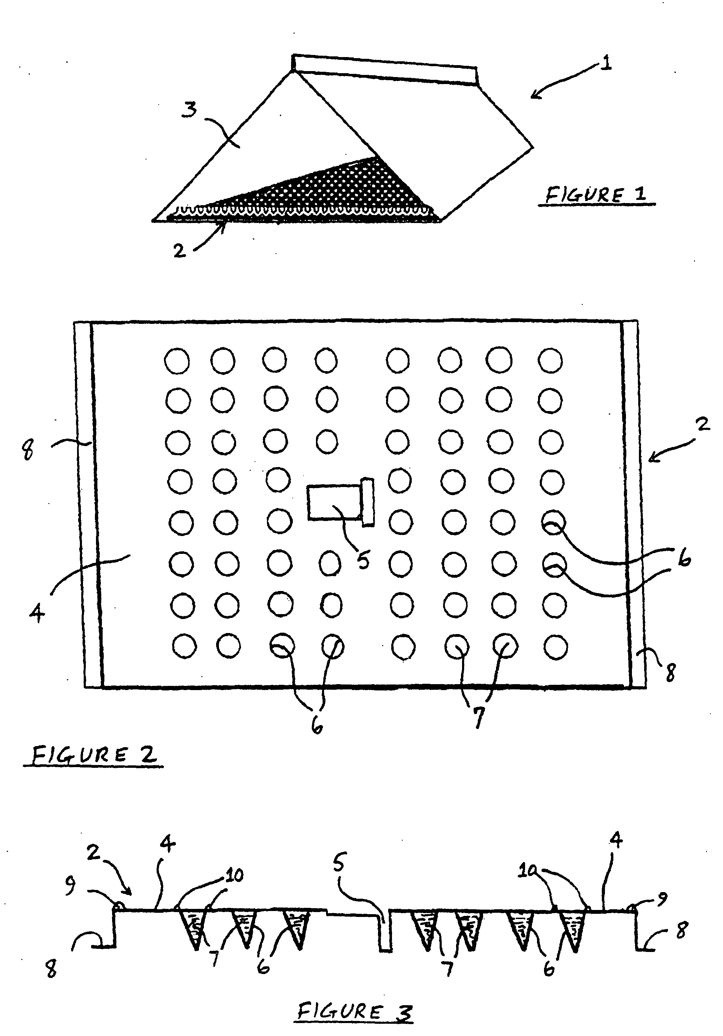

Referring firstly to Figures 1 to 3 of the accompanying drawings, an open-ended trap, indicated generally at 1 in Figure 1, for monitoring flying insect pests, is of generally triangular cross-section and comprises a base plate, indicated generally at 2, which has been placed inside the casing 3 of the open-ended trap 1, to replace the conventional sticky surface which is commonly used in such traps.

The base plate 2, as shown in Figures 2 and 3, defines an upper surface 4 thereof and has a central cavity 5 containing an odour attractant (not shown) of suitable formulation, for example, a semiochemical, such as a pheromone or a parapheromone, for attracting flying insect pests into the trap where they can land on and take-off from the upper surface 4 of the plate 2.

Within the surface 4 of the base plate 2 is provided a regular array of circularly cross-sectioned, downwardly-tapering recesses 6 in which is accommodated a particulate material in the form of a fine powder, as shown at 7 in Figure 3, which incorporates a pest-killing or behaviour-modifying agent and which is sufficiently fine for it to be capable of being rendered airborne by the movement of the pests, for example, the wing beats thereof, on, above or in the region of the powder-bearing surface 4. In this manner, the powder 7 forms a fine cloud thereof above the surface 4, thereby contaminating the insect pests flying above it and any others flying through the trap 1. Preferably, the maximum diameter of the recesses 6, namely, that at the open tops thereof, is less than, say, the body lengths of the pests.

As discussed above, the trap 1, or at least its base plate 2 and associated components, may be made of an electrically insulating material, for example, a suitable plastics material, and the powder 7 may be capable of being charged electrostatically, preferably by friction, as it is rendered airborne by the wing beats or other movements of the flying insect pests in the vicinity thereof. In this way, the electrostatically-charged powder particles adhere to the insect pests, thereby contaminating them and, possibly, allowing them to contaminate other insect pests of the opposite sex during mating attempts.

Various modifications can be incorporated into the pest monitoring trap 1, for example, to reduce loss of the powder 7 by wind action or other air currents blowing through it. Such modifications may include raised edges 9 at the periphery of the plate 2, which edges may be rounded to reduce turbulence being generated over the plate 2. Additionally or alternatively, the recesses 6 may be provided with raised edges 10 around their upper peripheries which may also be used for the same purpose.

The plate 2 may be preformed and arranged to stand alone, for example, by means of the feet 8, as shown in Figures 2 and 3, or designed to fit into conventional insect traps of various shapes and sizes. Alternatively, the recesses 6 may be formed during the manufacture of the trap 1 in, for example, the base wall of the casing 2.

In the embodiment of pest monitoring trap 1 discussed above with reference to Figures 1 to 3, the base plate 2, and hence the powder-bearing surface 4, lies in a generally horizontal plane during use. However, the orientation of the plane of the base plate 2, and hence that of the powder-bearing surface 4, may be vertical or at any suitable angle thereto.

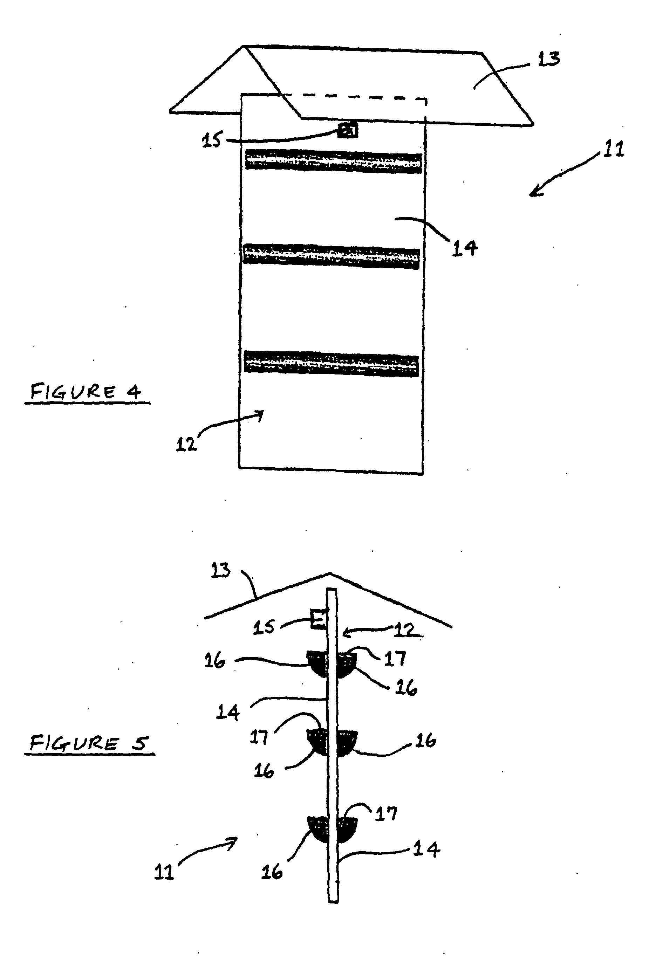

Such a vertical orientation of the plate and associated powder-bearing surface is shown in the second embodiment of pest monitoring trap, as indicated generally at 11 in Figures 4 and 5. This vertical orientation of the powder-bearing surface 14 of the plate 12 is, in certain circumstances, desirable because some species of flying insect pest, for example, the olive fruit fly, land preferentially on vertical surfaces.

In the second embodiment of flying insect pest monitoring trap shown in Figures 4 and 5, the opposed vertical surfaces 14 of the plate 12 are again provided with recesses, this time in the form of troughs 16, in which is accommodated, once again, a pest-killing or behaviour-modifying powder which is capable, namely, sufficiently fine, of being rendered airborne as a result of the wing beats or other movements of flying insect pests in the region thereof.

The trap 11 is provided with a roof 13 for preventing rainwater from accumulating in the troughs 16, whilst a source 15 of odour attractant, such as that discussed above in relation to the first embodiment of Figures 1 to 3, is provided at the upper region of the plate 12.

Thus, flying insect pests are attracted to the trap 11 by a combination of visual features, including colour, and the odour attractant 15, again as in the case of the first embodiment.

The troughs 16 in which the powder is accommodated, may be placed at an angle to their respective surfaces 14, or, as shown in Figures 4 and 5, may be in the form of cup- or trough-shaped projections, namely, the troughs 16.

The shape of the powder-accommodating recesses 6 of the first embodiment of trap 1 and the corresponding troughs 16 of the second embodiment of trap 11 may also be such that any turbulence of air flowing into them is reduced, which might otherwise lead to vortex formation. For example, they may be V-shaped in vertical section, such as the recesses 6 shown in the first embodiment of trap 1 of Figures 1 to 3. Alternatively, the recesses may also consist of channels in the base plate 2 which can be rectilinear, curved, concentric or spiral. The recesses may be discrete, such as those shown at 6 in the first embodiment of trap 1 or may be substantially continuous, for example, the effectively powder-bearing surface 4 of the plate 2 of the trap 1 may be corrugated.

By suitable modification, the respective recesses 6 and troughs 16 of the first and second embodiments of trap 1,11 may be rendered suitable for crawling insect pests and, indeed, other walking pests, whereby the pests disturb the particulate material, for example, the powder 7 of the first embodiment, by their movement, such as running, across the surface 4,14.

The efficiency of the inventive trap and its powder-bearing surface 4 of the plate 2 was demonstrated in the following experiments.

Two plastics plates 2, each 120 x 180 mm, were placed in a horizontal plane inside respective, separate cages, each 900 x 550 x 600 mm, in the laboratory, each cage containing 50 houseflies (*Musca domestica* L). Each plate 2 had a chemical lure (protein + (Z)-9-tricosene) at its centre, for example, in a central cavity 5.

One plate 2 had ninety six recesses 6, each 6 mm in diameter and 8 mm deep, with generally V-shaped vertical sections, in the surface 4 of the plate 2.

The second plate was of conventional, prior art design, having a smooth surface with no recesses therein and covered with a thin layer of carnauba wax powder weighing 0.32 grams. 0.16 grams of the same material was placed in the recesses 6 of the inventive plate 2.

After twenty four hours, 52% of the flies in the cage containing the one plate 2 were contaminated with more than fifty particles of the powder, per fly, against only 16% of the flies exposed to the powder-bearing surface of the second prior art plate. By weighing, it was found that the first plate had lost only 37.5% of its powder, whilst the second plate had lost 68.5%.

In a second experiment, the one plate 2 described above was charged with 0.09 grams of carnauba wax powder accommodated in the recesses 6. It was then placed in a horizontal position in the centre of a standard fly testing room, 28m² in area with plain white walls, floor and ceiling with a hundred houseflies and left for five days. At the end of that period, all the flies were coated with powder to the extent of at least 500 powder particles per fly, the amount of powder removed from the plate 2 being approximately 0.01 grams, namely, approximately only 10% of the original amount.

In a third experiment, a concentrated jet of carbon dioxide gas from a pressurised cylinder was directed across the surface of each of the one and second plates for 5 seconds at a velocity of approximately 1 metre per second. Only 18% of the powder was removed from the recesses 6 of the one plate 2, whilst 63% of the powder was removed from the smooth second, prior art plate.

In a fourth experiment, the one plate 2 described above was charged with 1.0 grams of carnauba wax powder accommodated in the recesses 6, and then placed horizontally in the bottom of a triangular monitoring trap in place of the normal sticky card. Three traps prepared in this way were then left suspended from trees outdoors in a garden at Southampton, England for one week, during which time they were exposed to average early summer climatic conditions. Three traps were similarly prepared but with the powder on a flat acetate sheet, to which the powder was initially adhered by electrostatic forces.

At the end of one week, an average of less than 1% by weight of the powder had been lost from the traps with the inventive plate, while an average of approximately 50% had been lost from the traps with the acetate sheet.

Thus, it will be appreciated that the invention enables the coating of pests, such as flying or crawling insect pests, with a pest-killing or behaviour-modifying agent using a vector particulate material capable of being rendered airborne by the pests' own wingbeats or other movements. Also, the loss of the particulate material, such as the powders discussed above, from the inventive pest control trap, by wind or other air currents, is reduced, in some instances, considerably. Further, the loss of particulate material can be controlled by accommodating it in recesses associated with a surface of the inventive pest control trap. Moreover, flying insect pests in particular can be controlled by coating them with powder of other fine particulate material which can be charged electrostatically, for example by friction, as it is rendered airborne by the pests' movements. Such particulate material can incorporate biological, synthetic and/or natural pesticides and may also be rendered airborne by the pests traversing, by walking or running, the surface bearing that material, as described above in connection with the preferred embodiments.

## Claims

1. A method of controlling a pest by at least partially coating the pest with a particulate material (7, 17) incorporating a killing or behaviour-modifying agent, which method comprises directing, attracting or otherwise luring the pest on to, above, or otherwise adjacent a surface (4, 14) bearing such a particulate material (7, 17), **characterised in that** the material (7, 17) is rendered airborne by the movement of the pest on, above, or in the region of the particulate material-bearing surface (4, 14).

2. A method according to claim 1, wherein the particulate material (7, 17) is a powder which is sufficiently fine for it to be rendered airborne by a pest moving across flying above or adjacent, or taking-off from the particulate material-bearing surface (4, 14), so that the pest becomes at least partially coated with the powder.

3. A method according to claim 2, wherein the powder (7, 17) comprises or is combined with at least one biological, synthetic or natural pesticide as a killing agent.

4. A method according to claim 1, 2 or 3, wherein the particulate material (7, 17) is charged electrostatically as it is rendered airborne from the particulate material-bearing surface (4,14).

5. A method according to any preceding claim, wherein the surface (4, 14) is associated with a trap (1, 11), comprising an electrically insulating material.

6. A method according to any preceding claim including providing a pheromone or parapheromone attractant (5, 15) for luring pests to be controlled.

7. A method according to any preceding claim, wherein undesired removal or loss of the particulate material (7, 17) from the surface (4, 14) is eliminated or at least substantially reduced.

8. A method according to any preceding claim, wherein the particulate material (7, 17) is accommodated in at least one recess (6) or trough (16) associated with the particulate material-bearing surface (4, 14).

9. A method according to claim 8, wherein the dimensions of the or each recess (6) or the or each trough (16), as the case may be, in which the particulate material (7, 17) is accommodated, are generally smaller than those of the pests to be controlled.

10. A method according to any of claims 1 to 9, wherein the surface (4) comprises part of a tubular trap (1).

11. Pest control apparatus comprising a surface (4, 14) on to, above or in the region of which a pest is capable of being directed, attracted or otherwise lured and which bears a particulate material (7, 17) incorporating a killing or behaviour-modifying agent, **characterised in that** the particulate material (7, 17) is capable of being rendered airborne by movement of the pest on, above, or in the region of the particulate material-bearing surface (4, 14).

12. Apparatus according to claim 11, wherein the particulate material (7, 17) is a powder which is sufficiently fine for it to be rendered airborne by a pest moving across, flying above, or in the region of, or taking-off from the particulate material-bearing surface (4, 14), so that the pest, becomes at least partially coated with the powder.

13. Apparatus according to claim 12, wherein the powder (7, 17) comprises or is combined with at least one biological, synthetic or natural pesticide as a killing agent.

14. Apparatus according to claim 11, 12 or 13, wherein the particulate material (7, 17) has properties which enable it to become charged electrostatically as it is rendered airborne from the particulate material-bearing surface (4, 14).

15. Apparatus according to any of claims 11 to 14, wherein the surface (4,14) is associated with a trap (1, 11), comprising an electrically insulating material.

16. Apparatus according to any of claims 11 to 15 comprising a pheromone or parapheromone attractant (5, 15).

17. Apparatus according to any of claims 11 to 16, wherein the particulate material (7, 17) is accommodated in at least one recess (6) or trough (16) associated with the particulate material-bearing surface (4, 14).

18. Apparatus according to claim 17, wherein the dimensions of the or each recess (6) or the or each trough (16), as the case may be, in which the particulate material (7, 17) is accommodated, are generally smaller than those of the pests to be controlled.

19. Apparatus according to any of claims 11 to 18, wherein the surface (4) comprises part of a tubular trap (1).

## Patentansprüche

1. Verfahren zum Kontrollieren eines Schädlings durch zumindest teilweises Überziehen des Schädlings mit einem Partikelmaterial (7, 17), das ein Mittel enthält, das tötet oder das Verhalten modifiziert, wobei das Verfahren umfasst: Lenken, Anziehen oder in anderer Weise Anlocken des Schädlings auf eine, über eine oder in anderer Weise in die Nähe einer Oberfläche (4, 14), die ein solches Partikelmaterial (7, 17) trägt, **dadurch gekennzeichnet, dass** das Material (7, 17) durch die Bewegung des Schädlings auf, oberhalb oder im Bereich der das Partikelmaterial tragenden Oberfläche (4, 14) in die Luft gebracht wird.

2. Verfahren nach Anspruch 1, wobei das Partikelmaterial (7, 17) ein Pulver ist, welches eine ausreichende Feinheit hat, dass es durch einen Schädling, der sich über die das Partikelmaterial tragende Oberfläche (4, 14) bewegt, über oder nahe dieser fliegt oder von der das Partikelmaterial tragenden Oberfläche (4, 14) abfliegt, in die Luft gebracht wird, so dass der Schädling zumindest teilweise mit dem Pulver bedeckt wird.

3. Verfahren nach Anspruch 2, wobei das Pulver (7, 17) mindestens ein biologisches, synthetisches oder natürliches Pestizid als Tötungsmittel aufweist oder damit kombiniert ist.

4. Verfahren nach Anspruch 1, 2, oder 3, wobei das Partikelmaterial (7, 17) elektrostatisch geladen wird, wenn es von der Partikelmaterial tragenden Oberfläche (4, 14) in die Luft gebracht wird.

5. Verfahren nach einem der vorhergehenden Ansprüche, wobei die Oberfläche (4, 14) einer Falle (1, 11) zugeordnet ist, die ein elektrisch isolierendes Material aufweist.

6. Verfahren nach einem der vorhergehenden Ansprüche, mit Bereitstellen eines Pheromon- oder Parapheromon-Lockmittels (5, 15) zum Anlocken von zu kontrollierenden Schädlingen.

7. Verfahren nach einem der vorhergehenden Ansprüche, wobei unerwünschtes Entfernen oder Verlust des Partikelmaterials (7, 17) von der Oberfläche (4, 14) eliminiert oder zumindest im wesentlichen reduziert ist.

8. Verfahren nach einem der vorhergehenden Ansprüche, wobei das Partikelmaterial (7, 17) in mindestens einer Aussparung (6) oder Vertiefung (16) untergebracht ist, die der Partikelmaterial tragenden Oberfläche (4, 14) zugeordnet ist.

9. Verfahren nach Anspruch 8, wobei die Abmessungen des oder jeder Aussparung (6) oder der oder jeder Vertiefung (16) je nachdem, in welcher das Partikelmaterial (7, 17) untergebracht ist, generell kleiner sind als die der zu kontrollierenden Schädlinge.

10. Verfahren nach einem der Ansprüche 1 bis 9, wobei die Oberfläche (4) einen Teil einer rohrförmigen Falle (1) aufweist.

11. Schädlingskontrollvorrichtung mit einer Oberfläche (4, 14), auf welche, oberhalb welcher oder im Bereich von welcher ein Schädling gelenkt, angezogen oder in anderer Weise angelockt werden kann und welche ein Partikelmaterial (7, 17) mit einem Mittel trägt, welches tötet oder das Verhalten modifiziert, **dadurch gekennzeichnet, dass** das Partikelmaterial (7, 17) fähig ist, durch eine Bewegung des Schädlings auf, oberhalb oder im Bereich der Partikelmaterial tragenden Oberfläche (4, 14) in die Luft gebracht zu werden.

12. Vorrichtung nach Anspruch 11, wobei das Partikelmaterial (7, 17) ein Pulver ist, welches eine ausreichende Feinheit hat, damit es durch einen Schädling, der sich über die das Partikelmaterial tragende Oberfläche (4, 14) bewegt, darüber oder in deren Bereich fliegt oder von dieser abhebt, in die Luft gebracht wird, so dass der Schädling zumindest teilweise mit dem Pulver bedeckt wird.

13. Vorrichtung nach Anspruch 12, wobei das Pulver (7, 17) mindestens ein biologisches, synthetisches oder natürliches Pestizid als Tötungsmittel aufweist oder damit kombiniert ist.

14. Vorrichtung nach Anspruch 11, 12 oder 13, wobei das Partikelmaterial (7, 17) Eigenschaften hat, die ermöglichen, dass es elektrostatisch geladen wird, wenn es von der Partikelmaterial tragenden Oberfläche (4, 14) in die Luft gebracht wird.

15. Vorrichtung nach einem der Ansprüche 11 bis 14, wobei die Oberfläche (4, 14) einer Falle (1, 11) zugeordnet ist, die ein elektrisch isolierendes Material aufweist.

16. Vorrichtung nach einem der Ansprüche 11 bis 15 mit einem Pheromon- oder Parapheromon-Lockmittel (5, 15).

17. Vorrichtung nach einem der Ansprüche 11 bis 16, wobei das Partikelmaterial (7, 17) in mindestens einer Aussparung (6) oder Vertiefung (16) untergebracht ist, die der Partikelmaterial tragenden Oberfläche (4, 14) zugeordnet ist.

18. Vorrichtung nach Anspruch 17, wobei die Abmessungen der oder jeder Aussparung (6) oder der oder jeder Vertiefung (16) je nachdem, in welcher das Partikelmaterial (7, 17) untergebracht ist, generell kleiner sind als die der zu kontrollierenden Schädlinge.

19. Vorrichtung nach einem der Ansprüche 11 bis 18, wobei die Oberfläche (4) einen Teil einer rohrförmigen Falle (1) aufweist.

## Revendications

1. Procédé pour lutter contre un insecte nuisible en revêtant au moins partiellement l'insecte nuisible avec une matière sous forme de particules (7,17) comportant un agent de destruction ou de modification du comportement, lequel procédé comprend le fait d'orienter, d'attirer ou de leurrer d'une manière ou d'une autre l'insecte nuisible sur, au-dessus de ou sinon au voisinage d'une surface (4, 14) portant ladite matière sous forme de particules (7, 17), **caractérisé en ce que** la matière (7, 17) est mise en suspension dans l'air par le mouvement de l'insecte nuisible sur, au-dessus ou aux environs de la surface (4, 14) portant la matière sous forme de particules.

2. Procédé selon la revendication 1, dans lequel la matière sous forme de particules (7, 17) est une poudre qui est suffisamment fine pour pouvoir être mise en suspension dans l'air par un insecte nuisible se déplaçant à travers, volant au-dessus ou au voisinage de, ou décollant de la surface (4, 14) portant la matière sous forme de particules, de sorte que l'insecte nuisible devient au moins partiellement revêtu de la poudre.

3. Procédé selon la revendication 2, dans lequel la poudre (7, 17) comprend ou est combinée à au moins un pesticide biologique, synthétique ou naturel en tant qu'agent de destruction.

4. Procédé selon la revendication 1, 2 ou 3, dans lequel la matière sous forme de particules (7, 17) est chargée électrostatiquement alors qu'elle est mise en suspension à partir de la surface (4, 14) portant la matière sous forme de particules.

5. Procédé selon l'une quelconque des revendications précédentes, dans lequel la surface (4, 14) est associée à un piège (1, 11) comprenant un matériau électriquement isolant.

6. Procédé selon l'une quelconque des revendications précédentes, comprenant la prévision d'un appât à base de phéromone ou de paraphéromone (5, 15) pour leurrer les insectes nuisibles contre lesquels on souhaite lutter.

7. Procédé selon L'une quelconque des revendications précédentes, dans lequel le retrait ou la perte indésirable de la matière sous forme de particules (7, 17) de la surface (4, 14) est éliminé(e) ou au moins sensiblement réduit(e).

8. Procédé selon l'une quelconque des revendications précédentes, dans lequel la matière sous forme de particules (7, 17) est logée dans au moins un recoin (6) ou une auge (16) associé(e) à la surface (4,14) portant la matière sous forme de particules.

9. Procédé selon la revendication 8, dans lequel les dimensions du ou de chaque recoin (6) ou de la ou de chaque auge (16), selon le cas, dans lequel/laquelle est logée la matière sous forme de particules (7, 17), sont généralement inférieures à celles des insectes nuisibles contre lesquels on souhaite lutter.

10. Procédé selon l'une quelconque des revendications 1 à 9, dans lequel la surface (4) comprend une partie d'un piège tubulaire (1).

11. Appareil de lutte contre les insectes nuisibles comprenant une surface (4, 14) sur, au-dessus ou aux environs de laquelle un insecte nuisible peut être orienté, attiré ou leurré d'une manière ou d'une autre, et portant une matière sous forme de particules (7, 17) comportant un agent de destruction ou de modification du comportement, **caractérisé en ce que** la matière sous forme de particules (7, 17) peut être mise en suspension dans l'air par le mouvement de l'insecte nuisible sur, au-dessus ou aux environs de la surface (4, 14) portant la matière sous forme de particules.

12. Appareil selon la revendication 11, dans lequel la matière sous forme de particules (7, 17) est une poudre qui est suffisamment fine pour pouvoir être mise en suspension dans l'air par un insecte nuisible se déplaçant à travers, volant au-dessus ou aux environs de, ou décollant de la surface (4,14) portant la matière sous forme de particules, de sorte que l'insecte nuisible devient au moins partiellement revêtu de la poudre.

13. Appareil selon la revendication 12, dans lequel la poudre (7, 17) comprend ou est combinée à au moins un pesticide biologique, synthétique ou naturel en tant qu'agent de destruction.

14. Appareil selon la revendication 11, 12 ou 13, dans lequel la matière sous forme de particules (7, 17) a des propriétés qui lui permettent de devenir chargée électrostatiquement alors qu'elle est mise en suspension à partir de la surface (4, 14) portant la matière sous forme de particules.

15. Appareil selon l'une quelconque des revendications 11 à 14, dans lequel la surface (4, 14) est associée à un piège (1, 11) comprenant un matériau électriquement isolant

16. Appareil selon l'une quelconque des revendications 11 à 15, comprenant un appât à base de phéromone ou de paraphéromone (5, 15).

17. Appareil selon l'une quelconque des revendications 11 à 16, dans lequel la matière sous forme de particules (7, 17) est logée dans au moins un recoin (6) ou une auge (16) associé(e) à la surface (4, 14) portant la matière sous forme de particules.

18. Appareil selon la revendication 17, dans lequel les dimensions du ou de chaque recoin (6) ou de la ou de chaque auge (16), selon le cas, dans lequel/laquelle est logée la matière sous forme de particules (7, 17), sont généralement inférieures à celles des insectes nuisibles contre lesquels on souhaite lutter.

19. Appareil selon l'une quelconque des revendications 11 à 18, dans lequel la surface (4) comprend une partie d'un piège tubulaire (1).
